# EUROPEAN PATENT SPECIFICATION

(11) **EP 0 557 072 B1**
(45) Date of publication and mention of the grant of the patent: **29.12.1997**
(21) Application number: 93301152.0
(22) Date of filing: 17.02.1993
(51) Int. Cl.: B65G 65/20, B63B 27/22

(54) **Discharging bulk materials**
Ausladen von Schüttgütern
Déchargement de matières en vrac

(30) Priority: 19.02.1992 GB 9203536
(43) Date of publication of application: 25.08.1993
(73) Proprietor: STRACHAN & HENSHAW LIMITED, Bristol BS99 7TJ (GB)
(72) Inventor: Dowden, Paul John, Almondsbury, Bristol BS12 4DX (GB)
(74) Representative: Gura, Henry Alan

(56) References cited:
- EP-A- 0 020 167
- EP-A- 0 190 038
- WO-A-84/02112
- DE-A- 2 939 995
- GB-A- 1 369 418
- GB-A- 1 498 458
- US-A- 3 144 142

## Description

This invention relates to unloaders for discharging bulk materials, in particular from a ship's hold, eg. for off-loading a dredger, and to ships provided with such unloaders.

It is known to employ fixed discharge equipment such as grabbing cranes or bucket wheel unloaders at the dockside to discharge bulk cargoes in port. Examples of such bucket wheel unloaders are described in GB 1498458 and DE 2711573. It is not always convenient, or even possible, to provide adequate fixed discharge equipment at a desired quayside location, however.

It has been proposed in EP 020167 to mount a bucket wheel unloader on board ship. The bucket wheel is mounted on one end of a generally horizontal boom which extends fore and aft, longitudinally of the ship's hold. The boom is in its turn mounted at its other end on a cross-carriage which runs on rails on the deck at opposite sides of the hold to advance the bucket wheel along the hold. The boom is cantilevered from the cross-carriage through a pivot connection which allows the bucket wheel to be raised and lowered. Transfer conveyors on the boom and the cross-carriage take material gathered by the bucket wheel to an off-loading conveyor running along one side of the hold.

This known arrangement works satisfactorily but in general it must be installed in a purpose-built ship because of the space it occupies. In particular, space must be found to accommodate the unloader clear of the ship's hold when material is being loaded, but the boom must have a substantial length if the bucket wheel is to operate effectively through the full depth of the hold. It is rarely the case that an existing dredger will have sufficient deck space available to accommodate such bulky equipment.

According to one aspect of the invention, there is provided a watercraft having a bulk cargo hold accessible from above, and a bucket wheel unloader for said hold comprising a carriage extending athwartships to straddle the hold and being displaceable fore and aft along the hold, at least one bucket wheel supported on said carriage with an axis of rotation extending generally in the direction of displacement of the carriage, and conveying means for the transfer of material gathered by said bucket wheel to a discharge means, said conveying means being maintained extending transversely to said direction of displacement of the carriage, said bucket wheel and conveying means being jointly linearly displaceable on the carriage, upwardly and downwardly along a vertical axis.

Such a construction can be made very compact in the longitudinal or travel direction of the carriage, and so can be more easily fitted in an existing vessel. Moreover, it can remain within the length of the hold without impeding the loading of cargo into the hold. Preferably, the carrier, bucket wheel or wheels, and transfer conveyor are all disposed within the extent of the carriage in said longitudinal direction.

The provision of a compact arrangement has its own advantages, independently of the facility with which it can be mounted on a vessel, and it can also be installed at a discharge dock or berth.

According to another aspect of the present invention, therefore, there is provided a bucket wheel unloader comprising a carriage arranged to be displaceable along a storage space such as a ship's hold, at least one bucket wheel supported by said carriage with its rotary axis extending generally in the direction of displacement of the carriage, for transferring to a discharge means material gathered by the bucket wheel, a transfer conveying means being maintained extending transversely to the direction of displacement of the carriage, and said bucket wheel together with the transfer conveying means being linearly displaceable upwardly and downwardly along a vertical axis.

In a preferred arrangement according to the invention, the unloader has two coaxial bucket wheels between which the transfer conveyor is located to receive material from both wheels. This ensures that the unloader can clear material effectively from both ends of a space such as a ship's hold, without requiring special adaptation of the contours of the ends of the hold.

The invention will be described by way of example with reference to the accompanying schematic drawings, in which:
Fig. 1 is a transverse cross-section of a ship's hold provided with a bucket wheel unloader according to the invention,

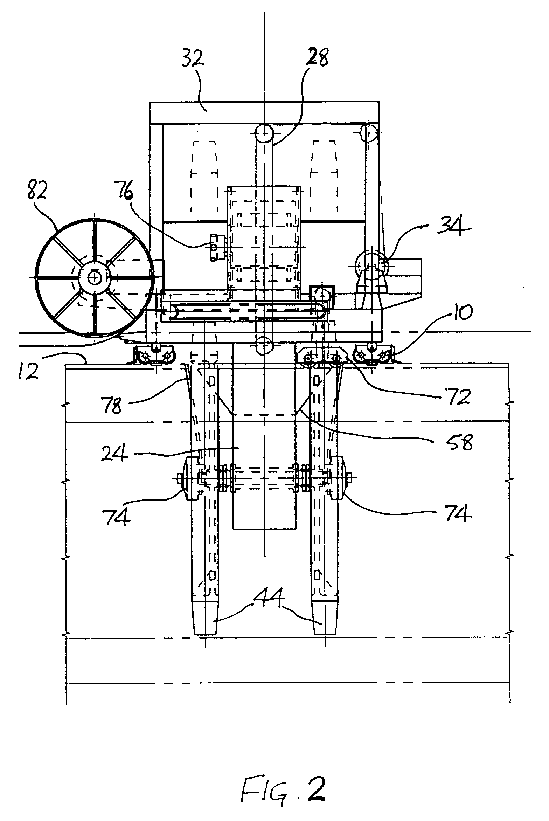

Fig. 2 is a longitudinal sectional view illustrating the relative dispositions of the carriage, carrier and bucket wheels, and

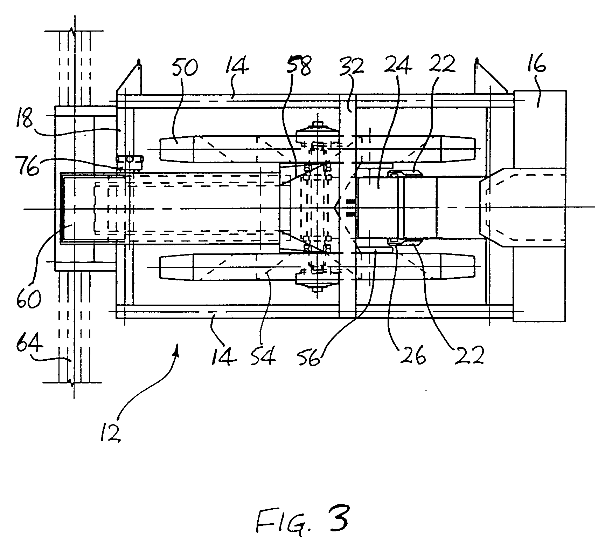

Fig. 3 is a plan section view illustrating the relative dispositions of the bucket wheels, bucket elevator and off-loading conveyor.

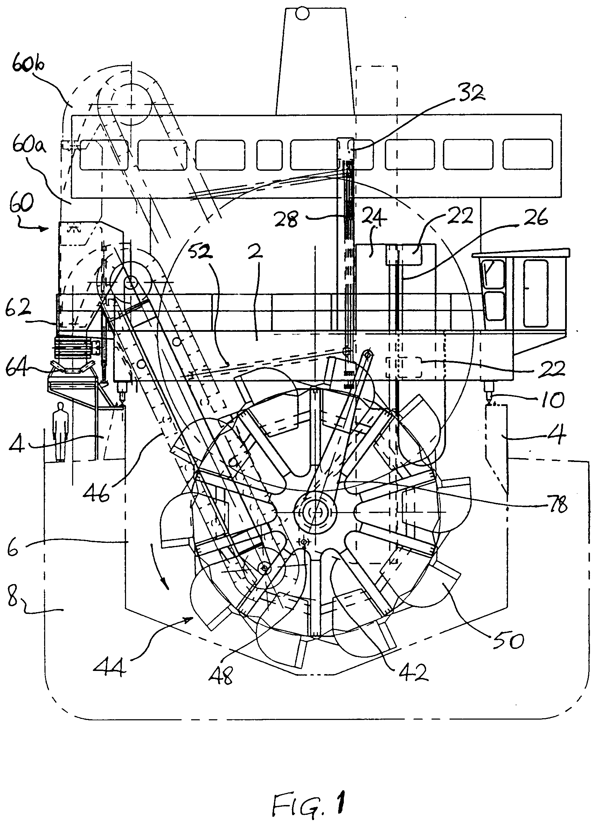

Fig. 1 shows a cross-carriage 2 of the unloader mounted on coamings 4 on opposite sides of the hold 6 of a ship 8, wheels 10 of the carriage sitting on rails 12 on the coamings. The carriage 2 comprises a frame-like structure with a pair of beams 14 straddling the top of the hold and connected together at one side of the hold through a main body part 16 of the carriage and at the opposite side by a stretcher 18. On opposite sides of the body part 16, which carries the driving cabin for the unloader, pairs of guide pads 22 are secured. A carrier 24 is provided with vertical guide tracks 26 on its opposite sides which are slidably engaged by the guide pads 22. The carrier 24 is suspended from the cross-carriage by a sheaved cable 28 depending from the top frame of a bridge structure 32 which rises from the beams 14. A winch 34 on the carriage can reel the cable 28 in and out to raise and lower the carrier 24.

The carrier 24 includes an arm 42 at its lower end on which are mounted a pair of coaxial bucket wheels 44 and, between the bucket wheels, the lower end of a bucket chain conveying means forming a bucket elevator 46. The bucket elevator 46 has only a pivot support connection 48 with the arm 42; cables 52 extend transversely between the elevator and an upper region of the carrier 24 and in conjunction with the pivot support to locate the bucket elevator 46 in a fixed position relative to the carrier 24 and bucket wheels 44.

The bucket wheels 44 are both cell-type wheels, the wheel buckets 50 discharging radially inwardly into side chutes 54 which direct the material into the space between the wheels. Fixed sector-shaped guard plates 56 on the carrier 24 lie close to the opposed side faces of the respective bucket wheels to screen the outlets of the side chutes 54 over the greater part of the rise of the buckets from the bottom of the hold as the wheels rotate in the arrowed direction. As each chute outlet opening passes the top of its guard plate the contents of the chute can fall into a feeder hopper 58 channelling the material to the base of the bucket elevator 46 from where the elevator buckets carry it away.

Mounted at the upper end of the bucket elevator is a telescopic discharge sleeve 60 leading to a hopper 62. The hopper 62 is secured to the stretcher 18 of the carriage to be located at a fixed height over an off-take conveyor 64 which extends along the side of the hold to discharge the material from the ship. As the carriage moves the bucket wheels along the hold, therefore, material is delivered from the hold through the bucket elevator 46, telescopic sleeve 60 and hopper 62 to fall onto the conveyor 64.

The carrier, bucket wheels and bucket elevator are shown in full lines in Fig. 1 in their lowest position. By driving the winch 34 to raise the carrier they can reach an upper position, indicated in broken lines in Fig. 1, in which loading the hold will not be impeded. If desired, it may be arranged that they can be raised further so that the carriage can be driven clear of the hold.

The carrier drive also allows the height of the bucket wheels to be adjusted during unloading to the depth of the material remaining in the hold. Vertical displacements of the bucket elevator 46 are accompanied by adjustment of the length of the discharge sleeve 60 to maintain a closed path to the hopper 62 and Fig. 1 indicates in broken lines two upper telescopic sections 60a,60b of the sleeve 60.

The cross-carriage 2 has a drive means 72 which engages with a fixed chain (not shown) extending the length of the hold, which may be five times or more the length of the carriage. The drive means 72 can be powered by a positive displacement hydraulic motor, like the similar motors 74,76 driving the bucket wheels 44 and bucket elevator 46. Pressurized hydraulic fluid for all the drives on the carriage is transmitted through a reel 82. An individual motor 76 is provided for each bucket wheel; these motors cannot be placed directly on the carrier 24 at the bucket wheel mountings so they are provided with torque reaction links 78 extending to the vertical column of the carrier to hold them against rotation.

The use of the opposed pair of bucket wheels with the bucket elevator between them ensures that the unloader can be lowered into the material in the hold and can remove material working in either direction along the hold without obstruction from the bucket elevator. The pair of bucket wheels also protect the bucket elevator from the material in the hold caving in upon it, which could otherwise easily result in jamming and even damage to the elevator.

## Claims

1. A bucket wheel unloader comprising a carriage (2) arranged to be displaceable along a bulk material storage space (6) such as a ship's hold, at least one bucket wheel (44) supported by said carriage to maintain its rotary axis extending generally in the direction of displacement of the carriage, and transfer conveying means (46) for transferring material gathered by said bucket wheel to discharge means (64),
wherein the transfer conveying means (46) extend from said bucket wheel (44) transversely to said direction of displacement of the carriage, and that said bucket wheel together with the transfer conveying means are upwardly and downwardly displaceable along a vertical axis.

2. A bucket wheel unloader according to claim 1 wherein the transfer conveying means (46) are mounted in a fixed position relative to said bucket wheel (44) and adjustable guide means (60) are provided for directing the material from said conveying means to the discharge means (64).

3. A bucket wheel unloader according to claim 2 wherein the adjustable guide means comprise a telescopic chute (60).

4. A bucket wheel unloader according to any one of the preceding claims wherein said bucket wheel and transfer conveying means are supported on a carrier (24) which is mounted in a substantially vertically displaceable manner on the carriage (2).

5. A bucket wheel unloader according to any one of the preceding claims having two bucket wheels (44) between which the transfer conveying means (46) is located to receive material from each wheel.

6. A bucket wheel unloader according to any one of the preceding claims wherein the transfer conveying means (46) extends obliquely upwards from the bucket wheel for transferring material to a discharge means (64) at one side of the storage space.

7. A bucket wheel unloader according to any one of the preceding claims wherein the or each bucket wheel (44) is driven by a motor (76) at its hub and said motor is rotationally restrained by a torque link (78) to a position that is fixed with respect to the bucket wheel axis.

8. A watercraft having a bulk cargo hold (6) accessible from above and a bucket wheel unloader for said hold comprising a carriage (2) extending athwartships to straddle the hold and being displaceable fore and aft along the hold, at least one bucket wheel (44) supported on said carriage with an axis of rotation extending generally in the direction of displacement of the carriage and being upwardly and downwardly displaceable along a vertical axis on the carriage, and conveying means (46) for the transfer of material gathered by said bucket wheel to a discharge means,
wherein said transfer conveying means (46) extend from said bucket wheel transversely of the hold, and that said bucket wheel and transversely extending conveying means jointly displaceable are upwardly and downwardly on the carriage.

9. A watercraft according to claim 8 wherein said bucket wheel (44) extends a major part of the width of the hold and is maintained in a position fixed centrally of the hold.

10. A watercraft according to claim 8 or claim 9 wherein the bucket wheel unloader is constructed and arranged in accordance with any one of claims 2 to 7.

## Patentansprüche

1. Becherradentlader, umfassend einen Schlitten (2), der so angeordnet ist, daß er entlang eines Schüttgutlagerraums (6), wie des Laderaums eines Schiffs, verschiebbar ist, zumindest ein Becherrad (44), das vom Schlitten so getragen wird, daß seine Rotationsachse allgemein in der Verschiebungsrichtung des Schlittens gehalten wird, und ein Übergabefördermittel (46) zum Übergeben von Material, das vom Becherrad aufgenommen wird, an ein Entlademittel (64),
worin sich das Übergabefördermittel (46) vom Becherrad (44) in Querrichtung zur Verschiebungsrichtung des Schlittens erstreckt und das Becherrad gemeinsam mit dem Übergabefördermittel entlang einer vertikalen Achse aufwärts und abwärts verschiebbar ist.

2. Becherradentlader nach Anspruch 1, worin das Übergabefördermittel (46) in einer fixen Lage relativ zum Becherrad (44) angeordnet und ein einstellbares Führungsmittel (60) vorgesehen ist, um das Material vom Fördermittel zum Entlademittel (64) zu lenken.

3. Becherradentlader nach Anspruch 2, worin das einstellbare Führungsmittel eine ausziehbare Rutsche (60) umfaßt.

4. Becherradentlader nach einem der vorangegangenen Ansprüche, worin das Becherrad und das Übergabefördermittel auf einem Träger (24) gehalten werden, der auf im wesentlichen vertikal verschiebbare Weise auf dem Schlitten (2) montiert ist.

5. Becherradentlader nach einem der vorangegangenen Ansprüche mit zwei Schaufelrädern (44), zwischen denen sich das Übergabefördermittel (46) befindet, um Material von jedem Rad aufzunehmen.

6. Becherradentlader nach einem der vorangegangenen Ansprüche, worin sich das Übergabefördermittel (46) vom Becherrad schräg aufwärts erstreckt, um Material zu einem Entlademittel (64) an einer Seite des Lagerraumes zu transportieren.

7. Becherradentlader nach einem der vorangegangenen Ansprüche, worin das oder jedes Becherrad (44) an seiner Nabe von einem Motor (76) angetrieben wird und der Motor durch einen Drehmomentverbinder (78) auf eine Drehlage beschränkt wird, die bezogen auf die Becherradachse fixiert ist.

8. Wasserfahrzeug mit einem Schüttgutladeraum (6), der von oben zugänglich ist, und einem Becherradentlader für den Laderaum, umfassend einen Schlitten (2), der sich querschiffs erstreckt, so daß er den Laderaum überspannt, und den Laderaum entlang vor und zurück verschiebbar ist, zumindest ein Becherrad (44), das auf dem Schlitten gehalten wird, wobei sich seine Rotationsachse allgemein in Verschiebungsrichtung des Schlittens erstreckt und entlang einer vertikalen Achse auf dem Schlitten aufwärts und abwärts verschiebbar ist, sowie ein Fördermittel (46) zur Übergabe von vom Becherrad aufgenommenem Material zu einem Entlademittel,
worin sich das Übergabefördermittel (46) vom Becherrad quer zum Laderaum erstreckt und das Becherrad und das sich in Querrichtung erstreckende Fördermittel auf dem Schlitten gemeinsam aufwärts und abwärts verschiebbar sind.

9. Wasserfahrzeug nach Anspruch 8, worin sich das Becherrad (44) über einen Hauptteil der Breite des Laderaums erstreckt und in einer Position fixiert ist, die in der Mitte des Laderaums liegt.

10. Wasserfahrzeug nach Anspruch 8 oder 9, worin der Becherradentlader nach einem der Ansprüche 2 bis 7 konstruiert und angeordnet ist.

## Revendications

1. Appareil de déchargement à roues à godets comportant un chariot (2) agencé pour être déplaçable le long d'un espace de stockage (6) de matières en vrac comme d'une cale de navire, au moins une roue à godets (44) étant supportée par ledit chariot pour maintenir son axe de rotation s'étendant généralement dans la direction de déplacement du chariot, et un moyen de convoyage de transfert (46) pour transférer la matière ramassée par ladite roue à godets au moyen d'évacuation (64),
dans lequel le moyen de convoyage de transfert (46) s'étend de ladite roue à godets (44) transversalement à ladite direction de déplacement du chariot, et en ce que ladite roue à godets conjointement avec le moyen de convoyage de transfert sont déplaçables vers le haut et vers le bas le long d'un axe vertical.

2. Appareil de déchargement à roues à godets selon la revendication 1, où les moyens de convoyage de transfert (46) sont montés dans une position fixe relativement à ladite roue à godets (44), et des moyens de guidage réglables (60) sont prévus pour diriger les matières dudit moyen de convoyage au moyen d'évacuation (64).

3. Appareil de déchargement à roues à godets selon la revendication 2, où le moyen de guidage réglable comprend une goulotte télescopique (60).

4. Appareil de déchargement à roues à godets selon l'une des revendications précédentes, où ladite roue à godets et les moyens de convoyage de transfert sont supportés sur un porteur (24) qui est monté de manière sensiblement déplaçable verticalement sur le chariot (2).

5. Appareil de déchargement à roues à godets selon l'une des revendications précédentes comportant deux roues à godets (44) entre lesquelles le moyen de convoyage de transfert (46) est situé pour recevoir les matières de chaque roue.

6. Appareil de déchargement à roues à godets selon l'une des revendications précédentes, où le moyen de convoyage de transfert (46) s'étend en biais vers le haut depuis la roue à godets pour transférer la matière à un moyen d'évacuation (64) à un côté de l'espace de stockage.

7. Appareil de déchargement à roues à godets selon l'une des revendications précédentes, où la ou chaque roue à godets (44) est entraînée par un moteur (76) à son moyeu, et ledit moteur est limité en rotation par une bielle de couple (78) à une position qui est fixe relativement à l'axe des roues à godets.

8. Navire ayant une cale de cargaison en vrac (6) accessible depuis au-dessus et un appareil de déchargement à roues à godets pour ladite cale comportant un chariot (2) s'étendant en travers du navire pour chevaucher la cale et déplaçable vers l'avant et vers l'arrière le long de la cale, au moins une roue à godets (44) supportée sur ledit chariot, avec un axe de rotation s'étendant généralement dans la direction de déplacement du chariot et déplaçable vers le haut et vers le bas le long d'un axe vertical sur le chariot, et un moyen de convoyage (46) pour le transfert des matières ramassées par ladite roue à godets vers un moyen d'évacuation,
dans lequel ledit moyen de convoyage de transfert (46) s'étend de ladite roue à godets transversalement relativement à la cale, et en ce que ladite roue à godets et le moyen de convoyage s'étendant transversalement sont déplaçables conjointement vers le haut et vers le bas sur le chariot.

9. Navire selon la revendication 8, dans lequel ladite roue à godets (44) s'étend sur une plus grande partie de la largeur de la cale et est maintenue dans une position fixe au centre de la cale.

10. Navire selon la revendication 8 ou la revendication 9, dans lequel l'appareil de déchargement à roues à godets est construit et agencé en accord avec l'une des revendications 2 à 7.
